# EUROPEAN PATENT SPECIFICATION

(11) **EP 1 756 599 B1**
(45) Date of publication and mention of the grant of the patent: **31.03.2010**
(21) Application number: 05760835.8
(22) Date of filing: 14.06.2005
(51) Int. Cl.: G01R 31/08, H04B 17/00

(54) **IMPAIRMENT ANALYSIS IN A NETWORK**
STÖRUNGSANALYSE IN EINEM NETZWERK
ANALYSE DE PERTURBATIONS DANS UN RESEAU

(30) Priority: 16.06.2004 US 868209
(43) Date of publication of application: 28.02.2007
(73) Proprietor: Sunrise Telecom Incorporated, San Jose, CA 95138 (US)
(72) Inventor: TERREAULT, Gerard, Pierrefonds, Québec H8Z 3K4 (CA)
(74) Representative: Liesegang, Eva
(86) International application number: PCT/US2005/021206
(87) International publication number: WO 2006/007382

(56) References cited:
- US-A- 5 805 638
- US-A- 6 128 355
- US-A1- 2004 047 312
- US-B1- 6 304 594
- US-B1- 6 662 321
- US-B1- 6 747 969

## Description

The present invention concerns communications networks and more particularly to methods of analyzing signals used in the networks.

### BACKGROUND OF THE INVENTION

Community Antenna Television (CATV) networks carry television signals to subscribers in the form of analog and digital signals. Various methods are used to quantify the performance of this distribution network. In the analog world, the methods are well established, whereas in the digital world new methods are required to measure the performance under different conditions. CATV networks are used in the downstream to carry the digital signal in the form of Quadrature Amplitude Modulation (QAM), especially under the format of International Telecommunication Union (ITU) J-83 Annex A, B or C, according to the country of use. Downstream transmission is continuous, with so-called stuffing data, if no user traffic is present. In the upstream direction, burst transmission can follow the Data Over Cable Service Interface Specification (DOCSIS^{™}) 1.0, 1.1 or 2.0 standard with modulation format of Quadrature Phase Shift Keying. (QPSK), QAM or Collision Detection Multiple Access (CDMA).

Many types of impairments are known to degrade these signals. Test instrumentation has been developed to measure these impairments, in particular signal-to-noise, phase noise, static constellation distortion (I/Q gain and phase, compression) and Continuous Wave (CW) interference. The CW interference can be detected and measured within some limitations. The network distortion products known as Composite Second Order (CSO) and Composite Triple Beat (CTB) also cause interference; but they can be mistaken for CW even though they are different and cannot be measured the same way. It is important to clarify the difference between CW interference and CSO / CTB. CW interference has a fixed frequency and amplitude. It generates a rotating shift of the constellation's soft decision, visible as the "doughnut" effect on the constellation.

CSO and CTB on the other hand are the composite of many (hundreds, thousands) of very small distortion products of the second and third order between each one of the carriers on the system. Consequently, CSO/CTB have noise like characteristics. These characteristics include a spread in frequency related to the spread in frequency offset of the carriers to their nominal frequency (usually < 10 kHz); the phase of these carriers come in and out of alignment and cause a variation in level (the tighter the frequency spread, the less frequent the phase alignment occur but the longer it lasts). Variations of ± 15dB relative to the average have been reported, and may last up to a few hundred microseconds.

The current impairment measurement methods rely on capturing an actual signal and applying processing algorithms to extract information on the impairment combined with the signal. For impairments external to the signal, there are four types of analysis instrumentation that are used to measure QAM Impairments, namely QAM Impairment Analysis, Rohde & Schwarz^{™} analysis, as used in the EFA^{™} series of instruments the Subtraction method, and spectrum analysis with narrow resolution bandwidth.

### OAM Impairment Analysis

In this method, a large number of constellation's soft decisions are collected and the following algorithm applied: calculating distances from the actual soft decisions to the ideal point; generating a histogram of the distances; and comparing the histogram to a set of histogram templates with known amount of noise and CW interference. The best match gives the noise and CW levels. This method relies on a best match; but the difference between various templates is quite small when the CW interference is small. This method does not allow identification of the CSO/CTB impairment vs. CW because of its varying amplitude, so it is lumped into the noise measurement.

### Rohde & Schwarz

This method is described in the manual of the EFA^{™} series instrument (Rohde & Schwarz^{™}, EFA Operating Manual, Sections 2.5.9.1 and 2.5.9.2, document No.: 2068.0950.12-11). This method relies on the calculation of the rms value of the distances for noise measurement and on the offset of the rms peak. When CW interference is small, the offset cannot be identified, which limits the accuracy of CW measurement. Again this method does not distinguish CSO/CTB from noise.

### Subtraction Method

This method includes: capturing a sequence of constellation's soft decisions; generating a time reconstruction of the "original" signal by using the ideal symbols; subtracting the ideal signal from the actual received signal; and analyzing the difference as it represents the "impairments". This method is computation intensive and it assumes that there have been no errors in transmission.

### Spectrum Analysis

This method uses spectrum analysis with a narrow resolution bandwidth such that interference signal will emerge from the QAM spectrum. Assuming a 5 MHz signal bandwidth, if a 30 kHz resolution bandwidth (RBW) is used, the detected QAM signal is now 22 dB below the total average power; hence an interference that is 25 / 27 dB below the QAM total power could be identified with long enough averaging. To achieve a more sensitive detection, a narrower RBW may be used (36 dB with a 1 kHz RBW). This is usable with CW, but it; is difficult to detect CSO/CTB that is spread over a 30 kHz bandwidth and whose amplitude varies in time.

This there is a need for an improved method for analyzing signals in a network.

From US 2004/0047312 Al, a method and system for uplink interference avoidance is disclosed. The system comprises a base station for transmitting a data flow from a data source to a mobile device, which is receiving a data flow. Accordingly, a downlink channel interconnecting the base station and the mobile unit is provided. The system uses a compressed mode which provides a period of time sufficient to permit analysis of signal impairment, namely uplink interference, in the channel without interrupting the data flow.

### SUMMARY OF THE INVENTION

The present invention reduces the aforesaid difficulties and disadvantages by providing a system and method for temporarily removing the actual QAM signal and measuring those impairments that are present in the channel in the absence of a signal. Advantageously, the present invention allows the removal of the signal without causing an interruption of service to the subscribers. Moreover, the method allows measurement of impairments that are external to, and independent of, the signal, that is, noise, CW interference, CSO, CTB and the like. The method does not directly measure impairments of the signal itself such as phase noise and static distortion. In addition, the method takes advantage of the characteristic that the data already has redundancy and voluntarily interrupts the signal to check line impairment.

Accordingly, in a first embodiment of the present invention, there is provided a system for maintaining an uninterrupted data flow in a communications network, the system comprising: a) a transmitter for transmitting the data flow from a data source; b) a receiver for receiving the data flow; c) a channel interconnecting the transmitter and the receiver, the data flow being communicated between the transmitter and the receiver through the channel; and d) a switch located in the channel and disposed between the transmitter and the receiver, the switch being openable for a period of time sufficient to permit analysis of signal impairment in the channel but short enough that data missed during the interrupted transmission can be recovered by an error connection.

Accordingly, in a second embodiment of the present invention, there is provided a method of maintaining uninterrupted data flow in a communications network during signal analysis, according to claim 6.

### BRIEF DESCRIPTION OF THE DRAWINGS

Further aspects and advantages of the present invention will become better understood with reference to the description in association with the following Figures in which:
Figure 1 is a simplified diagram showing a bi-directional CATV network with cable modem service;
Figure 2 is a simplified flow diagram of dual channel coding between a transmitter and a receiver;
Figure 2a is a simplified flow diagram of dual channel coding between FEC encoding and FEC decoding;
Figure 2b is a simplified flow diagram of an embodiment of a gated switch located downstream of a QAM modulator;
Figure 3 is a simplified flow diagram showing continuous QAM transmission;
Figure 4 is a simplified flow diagram of the gated switch interrupting a transmission;
Figure 4a is a representation of a transmission wave with an interrupted transmission;
Figure 5 illustrates interleave burst protection periods and latency for ITU J-83 annexes A, B;
Figure 6 is a diagrammatic representation of consecutive Burst transmissions in an upstream channel;
Figure 7 is a table of upstream Burst transmissions in the upstream channel; and
Figure 8 is a QAM signal detected in spectrum analysis showing different resolution bandwidths.

### DETAILED DESCRIPTION OF THE PREFERRED EMBODIMENTS

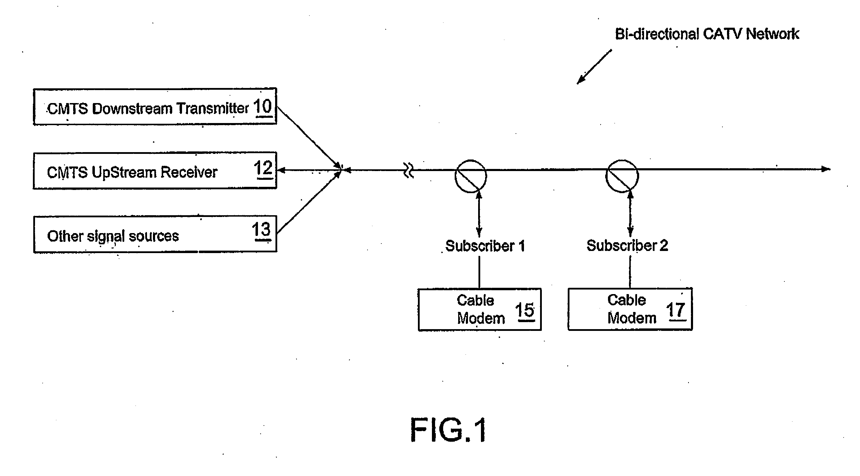

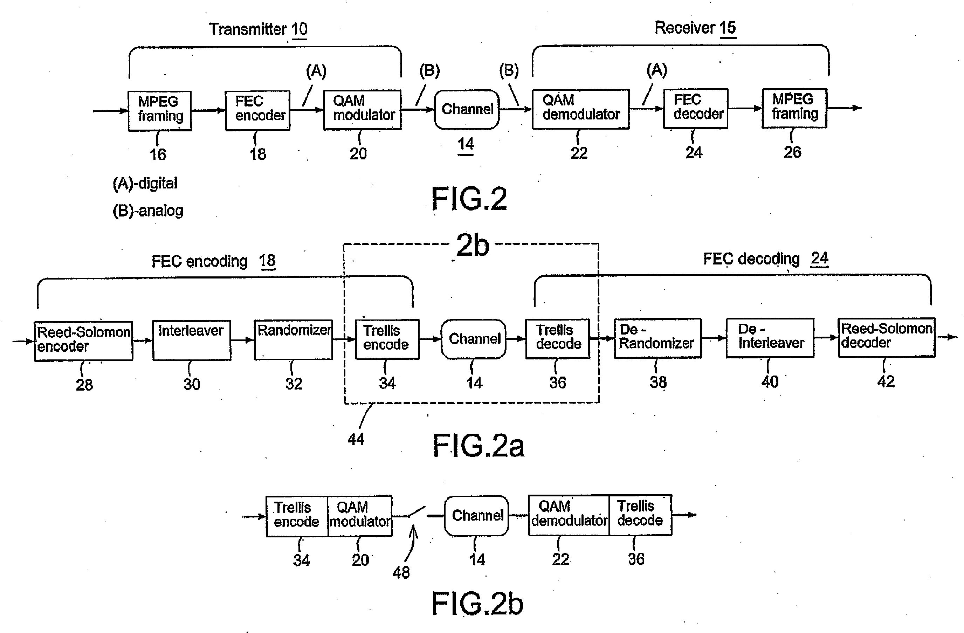

Referring now to Figures 1 and 2, a simplified a diagram of a bi-directional CATV network is illustrated, which includes a Cable Modem Termination System (CMTS) downstream transmitter 10 and a CMTS upstream receiver 12. The network optionally includes a number of other signal sources 13. The transmitter 10 and the receiver 12 are in communication with cable modems at the subscribers, the transmitter 10 receiving digital data, which is then communicated to the cable modems located downstream therefrom. A plurality of subscribers' cable modems (subscriber receivers 15, 17) in the CATV network (only two are illustrated for clarity) receives the signals from the transmitter 10 and transmit upstream to the receiver 12 in assigned time slots. Typical CATV frequency bands are assigned as follows: 5 to 42 MHz for cable modem upstream; 55 to 550 MHz for analog television channels and 550 to 750 MHz for digital channels (television and cable modem downstream).

Broadly speaking, the digital data includes a QAM digital signal, which travels between the downstream transmitter 10 to the cable modems and back to the upstream receiver 12 via a communications channel 14 to the subscribers. The channel 14 interconnects the transmitter 10, the receiver 12, and cable modems and may be a physical link, for example, fibres, coaxial cables and the like, or it may be non-physical, for example an air path. Although the following description will focus on downstream QAM signals, it is to be understood that the same principles apply to upstream transmission and to other signal formats and standards known to those skilled in the art.

### QAM Channel Coding

Referring now to Figures 2 and 2a, it is well known in the art that transmission of signals through transmission channels 14 is imperfect and typically leads to channel impairments. To combat the channel impairments, which include, for example, Gaussian noise, impulse noise, interference and the like, channel coding is added to the data stream to be transported.

An ITU J-83 standard is used to illustrate the principle of channel coding and is set for digital video and data service in CATV network, and includes MPEG (Moving Pictures Expert Group) framing 16. One skilled in the art will recognize, however, that similar schemes may be used in all digital channels with different parameters depending on the application.

Channel coding is a dual process in which every step at the transmitter 10 side has a mirror process at the subscriber receiver 15 side such that the data stream is transparently transported. As best illustrated in Figure 2, the ITU J-83 standard, on the transmitter 10 side, includes the MPEG framing 16, an FEC encoder 18, and a QAM modulator 20. On the subscriber receiver 15 side, a QAM demodulator 22 is connected to the channel 14, with an FEC decoder 24 and MPEG framing 26 being connected to the QAM demodulator 22.

### Reed-Solomon Encoding, Forward Error Correction (FEC) codes

As best illustrated in Figure 2a, a Reed Solomon encoder 28 appends a data packet with Reed-Solomon codes such that at the reception, virtually all transmission errors are detected, and a number of errors can be corrected (one errored symbol can be corrected for two added FEC symbols per packet). Similarly, a Reed Solomon de-encoder 42 is located in an FEC decoding region 24 for detecting error and correcting those it can using the Reed Solomon codes from the signal.

The content (data and FEC codes) of a set of data packets are interleaved by an interleaver 30. For example, the transmitted symbols are a sequence of symbols from consecutive packets such as 1^{st} symbol of 1^{st} packet, then 1^{st} symbol of 2^{nd} packet up to the 1^{st} symbol of the last packet, then 2^{nd} symbol of 1^{st} packet and 2^{nd} symbol of 2^{nd} packet, until the last symbol of the last packet. The feature of interleave is such that an impulse noise or a momentary interruption of transmission causes adjacent errored symbols in transmission, but when de-interleaved by a de-interleaver 40, the adjacent errors are spread over a large number of packets. The FEC can then correct the few errors in each packet.

### Randomization

Randomization by a randomizer 32 is a modulation characteristic in which long streams of 1 or 0 are prevented by multiplying transmitted data with a random sequence. At reception, a derandomizer 38 restores the original data sequence.

Referring now to Figures 2a and 2b, an embodiment of the present invention is illustrated in which, broadly speaking, the QAM signal is removed for a period of time from the data signal, which permits analysis of impairments in the channel 14, but without disrupting QAM service to the subscribers. This is achieved by using a short interruption, typically in the order of 33 µsec, so that the Forward Error Correction (FEC) mechanism couples with the de-Interleaver 40 and the subscriber receiver 15 side can recover the missing piece of information, as will be described below.

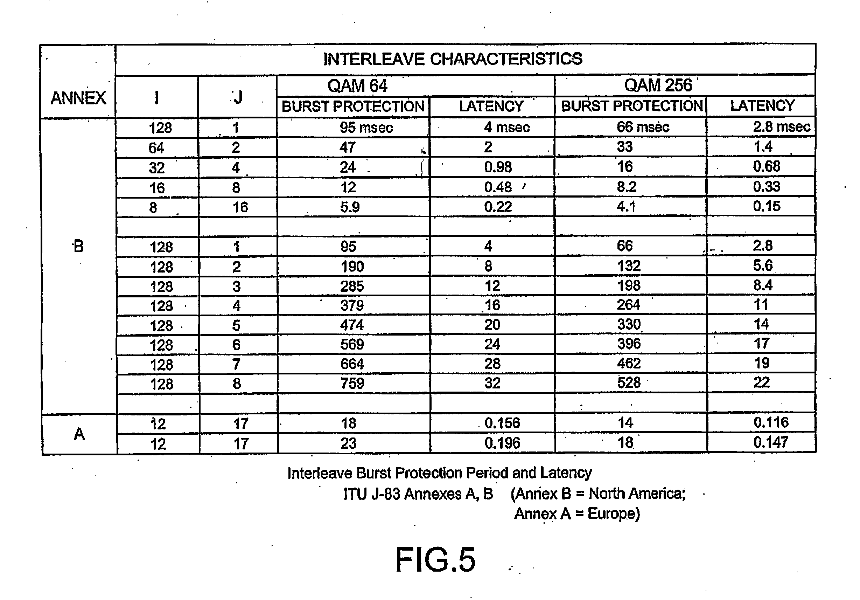

Figure 5 is a table of the relationship between the interleaving characteristics and burst protection period. The burst protection period corresponds to the length of time during which the signal can be disrupted without loss of data due to the error correcting mechanism of the FEC. Mapping represents the process of grouping data bits into QAM constellation symbols (64 QAM or 256 QAM). In the J-83 Annex B format (for North American subscribers), the QAM mapping is combined with Trellis Coded Modulation by a Trellis encoder 34, as that is a further defense against Gaussian noise. Consequently, transmission can be interrupted and yet the missing data for the subscriber can be regenerated. In the specific case of J-83 Annex B, at interleave 128 x 1 and QAM 256; the burst protection period is typically 66 µsec. Similarly, at interleave 128 x 4 and QAM 256; the burst protection period is typically 264 µsec.

For QAM 64, at interleave 128 x 1; the burst protection is typically 95 µsec. Similarly, at interleave 128 x 4; the burst protection is typically 379 µsec.

### Gated Impairment Measurement

If an interruption of QAM signal for 33 µsec (i.e. less than the burst protection period above) is generated at the transmitter 10, the data should be recovered in the subscriber receiver 15, but it reduces the margin for "normal" impairments. The test instrument can then sample the channel bandwidth during that period. Assuming a Nyquist sampling of the 6 MHz channel bandwidth at 12 Mega-samples/sec, 400 samples are produced that can be used in a FFT (Fast Fourier Transform) with a resolution of 6 MHz/ 200 (½ number of samples) or 30 kHz (in practice, a higher sampling rate is used for anti-aliasing purpose, but the effective resolution is the same). This 30 kHz is similar to the 30 kHz RBW used for CSO/CTB measurements. Consequently in-channel impairments can be measured, such as noise spectrum, CW interference, CSO/CTB interference. Further by repeating the interruption /sampling process, averaging can be implemented as well as time-graph or amplitude-histogram of interferers in particular CSO/CTB.

### Operational trade-offs

Depending on the channel coding scheme in use, the burst protection period varies, but in practice 66 µsec is a lower limit in J-83 Annex B, for most schemes it is longer, which helps in terms of either larger number of samples (and resolution in analysis) or a relatively shorter interruption hence more headroom for normal channel impairments.

In addition to the interruption period, the repetition rate of interruption is important. It should be slower than the Latency of the Interleaver so that two interruptions may not overlap the same interleave sequence. In addition, it is safer to space the interruptions so that, on a poor channel, if FEC is insufficient and data errors occur, they are widely spaced. For instance a repetition rate of one interruption per second, on Cable modem operation would cause one repeat packet per second, quite acceptable. On a video channel, the missing Moving Pictures Expert Group (MPEG) 16 packet per second, on a channel that carries 10 / 12 programs, means on the average a disturbance on the program every 10 /12 seconds; notwithstanding that in video decoding a single MPEG packet in error can be concealed easily.

### Upstream or Bursty transmission

In addition to the downstream continuous transmission, the same principle may be applied to upstream bursty transmission.

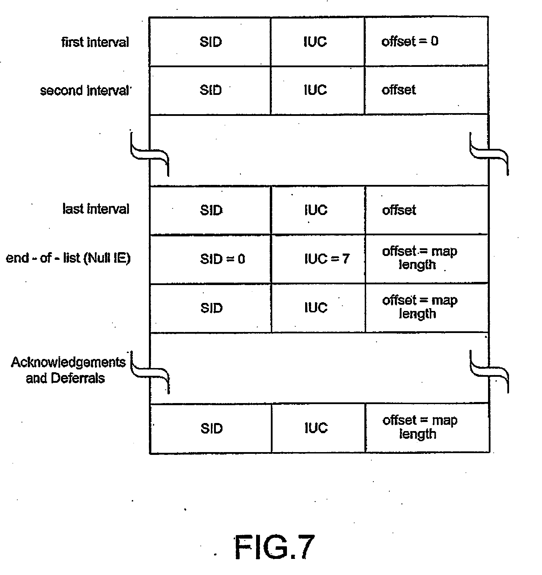

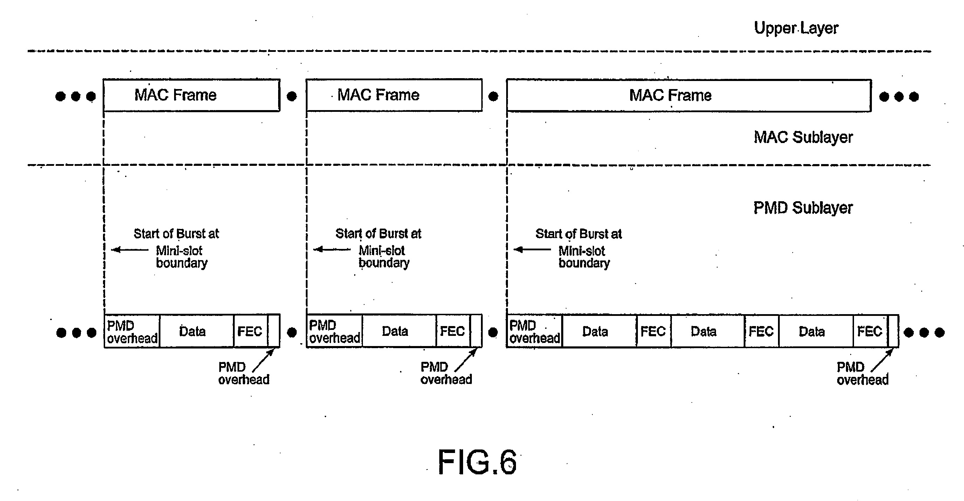

Referring now to Figures 6 and 7 most transmission media that use a common channel for multiple users rely on a traffic regulation mechanism to minimize collisions. This is the case of the DOCSIS^{™} standard where transmission slots are allocated by the network controller, called Cable Modem Termination System (CMTS), to the users to transmit upstream data without collision. Except for some specific slots allocated for users requesting transmission permission, the CMTS regulates precisely all traffic through MAP tables where cable modems are granted permission to transmit for a specific number of "mini-slots' within the period covered by the current Upstream Bandwidth Allocation Map (MAP). Consequently, the CMTS can insure that specific time periods can be free of user transmission. These periods are then used for upstream channel transmission Impairment measurements in a similar fashion to that of the downstream during signal interruption. A measurement instrument is conveniently located in the head-end (close to the CMTS) for network monitoring, but it could also be located in the network, provided it has a known delay relative to the CMTS so that "quiet" period is also known. Alternatively, a designated cable modem may not transmit when granted, consequently the channel is quiet and measurements on the channel can take place. The designated cable modem will transmit when required by the CMTS to replace the 'missing' transmission and to satisfy protocol procedures.

### Alternate measurement methods

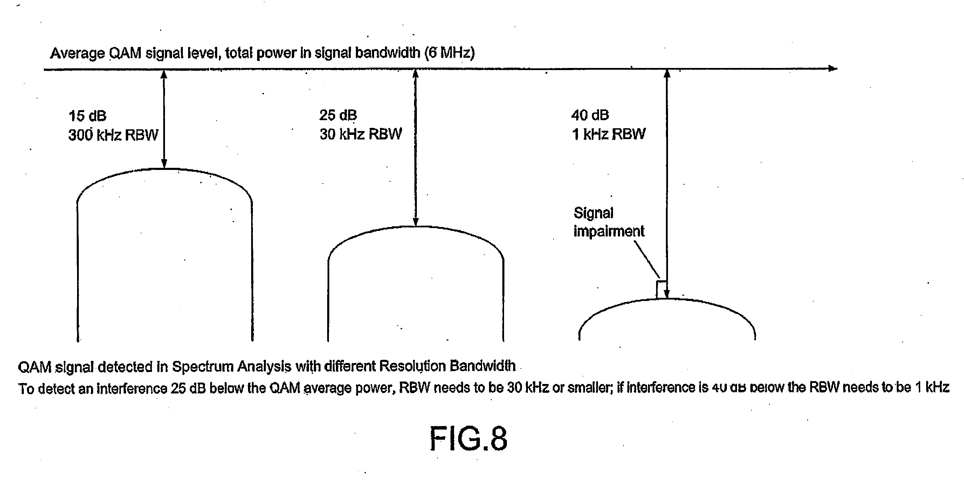

Referring now to Figure 8, instead of sampling the total signal bandwidth at once, the sampling can be accomplished with a sampling bandwidth narrower than that of the signal and multiple sampling processes are performed across the signal bandwidth to scan the entire band. A second alternate method relies on a receiver with a detector and Resolution bandwidth, such as a Spectrum Analyzer (in log mode or linear mode). This method gives information on the total power within the Resolution Bandwidth over time, but it does not differentiate the various components of this power. It has less discriminating capability than the bandwidth sampling method.

### EXAMPLES

Abbreviations used throughout include:
I = number of taps;
J = Increment;
SID = Service Identifier;
REQ = REQuest
MAC = Media Access Control;
PMD = Physical Media Dependant; and
IE= Information Element.

### 1. Downstream transmission

### 1.1 Transmitter implementation

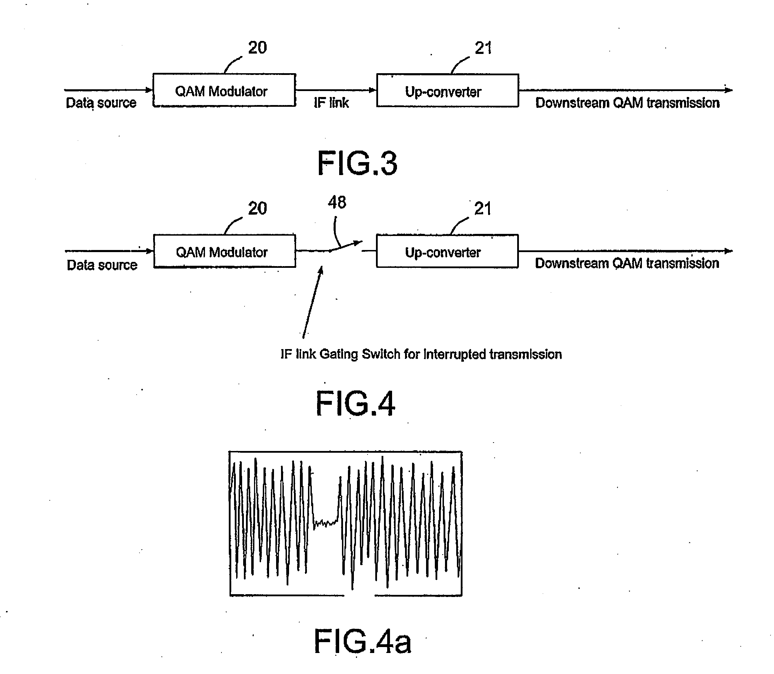

Referring now to Figures 3 and 4, the downstream QAM transmitter 10 includes a data source, the QAM modulator 20 and an up-converter 21. The data source feeds the data to be transmitted to the QAM modulator 20 in digital wired format such as parallel data plus clock or an Asynchronous Serial Interface (ASI). The QAM modulator 20 receives the data, inserts the channel coding described above and modulates the carrier in the QAM format and filters the modulated signal at a fixed frequency band referred to as Intermediate Frequency (IF). The up-converter 21 translates the IF band to the assigned band for operational use. The gating, or transmission interruption of the present invention is implemented by inserting a high-speed switch 48 either at the output of the up-converter 21 or more conveniently at the IF link between the QAM modulator 20 and the up-converter 21. The high speed switch 48 cuts-off momentarily the IF link causing an interruption of the transmitted signal. Typical switches used include, for example, solid-state switches, such as Gallium Arsenide Microwave Monolithic Integrated Circuit (GaAs MMIC) or the like, which can provide an isolation > 60 dB in tens of nano-seconds. A controlling circuit (not shown) for the high speed switch 48 is a rectangular signal whose repetition rate and pulse duration can be adjusted, conveniently using, for example, programmable digital dividers and a clock signal. The pulse duration corresponding to the QAM interruption is adjusted to the current QAM channel coding, not exceeding the Burst Protection Period. The repetition rate is adjusted to minimize subscribers' inconvenience. The switching action needs not be synchronized with the data stream or the channel coding framing. In order to minimize possible degradation to service, the interruption mechanism may be turned ON-OFF either on a scheduled basis or on demand by manual operation or remote control.

### 1.2 Measuring Instrument Implementation

As best illustrated in Figure 4a, the measuring instrument is a receiver tuned at the QAM signal assigned frequency. This receiver can be a spectrum analyzer in the zero span mode or a fixed or variable tuned receiver. The IF bandwidth of the receiver is normally equal to that of the QAM signal, but a wider bandwidth can be filtered to correspond to the signal BW, and a narrower bandwidth is usable with the restriction that the analysis is limited to measuring the instrument receiver bandwidth.

The receiver IF signal is continuously sampled at a rate above the Nyquist limit to insure a capture of the whole information content of the bandwidth. A continuous trigger mechanism tracks signal strength to detect a level below the lowest symbol level used in the specific format, such that, in the case of QAM256, the lowest level symbol is approximately 14dB below the average level. Adding a 6 dB headroom the trigger indicates transmission interruption when the received signal level is 20 dB below the averaged receiver level. This indicates the period of measurement with measurement valid samples. It is convenient to sample continuously and to use the trigger as "marker" on the total sample set. If the transmission interruption duration and repetition is known to the receiver, it is convenient to add a maximum valid samples duration, as well it is convenient for the receiver to rely on a known period without valid samples to simplify scheduling of sampling, samples retrieval and samples processing.

### 1.3 Samples Processing

The samples are processed with FFT and other known methods either in hardware (dedicated or programmable logic) or in software (Digital Signal Processors or more general purpose processor) or in a mix of both.

In order to correlate the CSO and CTB impairments under the same conditions for analog and digital signals, that is an effective 30 kHz bandwidth, the sampling period should be 1/30 kHz = 33 µsec (the signal blanking is slightly longer i.e. 35 µsec).

### 1.4 Multiple Sampling periods

In the case of J-83 Annex A (the European Standard), as best illustrated in Figure 5. the Burst protection period is quite short at 18 or 14 µsec hence an interruption of 35 µsec would cause un-correctable errors. It is then preferable to use a short interruption (such as 8 µsec) and make 4 sampling periods and then integrate these 4 sets of samples into one long set with an equivalent length of 32 µsec.

### 2. Upstream Transmission

Referring now to Figures 2a and 2b, the overall process is similar in the upstream and downstream application but for one major difference, instead of interrupting a continuous transmission, a burst of the bursty transmission is omitted.

At the receiver 12 end a similar threshold as for signal interruption is used, with the threshold adjusted for the modulation format, input signal level variation between users, and a "current signal level range" to memorize levels in the case of long periods without upstream traffic. Two implementations are possible, with or without CMTS active cooperation.

In the active cooperation mode, more suited to upstream channel monitoring at the head-end, the CMTS grants mini-slots to a device that is either known to be inexistant or.to a device designed not to answer, in both cases there is no transmission, reception for analysis can take place. The CMTS does need to know that no transmission will take place, hence no retransmission request are necessary. The receiver must also listen to the downstream channel to receive MAP tables and open its reception window accordingly.

In the non-cooperative mode, more suited to field operation, the instrument emulates a cable modem, registers, ranges and then requests transmission permission. When granted, it does not transmit, allowing sampling of the channel for analysis purposes. The CMTS will then request a retransmission for the "missed" transmission, the instrument will then transmit a message to a given address to clear the retransmission request and clear the channel.

Also the instrument that emulated the Cable Modem can be in a remote location and the sampling/measurement instrument in another such as the head-end.

Applicant tested the system's performance using a QAM signal source modulated according to the ITU J-83 Annex B format (North American Standard). The source & (Wavecom^{™} 4050 + 4040) fed a QAM signal receiver (AT2000^{™}) following the same format.

The receiver allowed a large number of measurements of the received signal, in particular the 'Bit Error Rate" before and after the Reed-Solomon coding, the "Errored Second" after the Reed-Solomon coding. Between the source and the receiver, an electronic switch was located that completely interrupted the signal for a controllable lapse (period) with a controlled repetition rate. The "Bit Error Rate" was observed while modifying the interruption period from 66 µsec down to 10 µsec (66 µses corresponding to the "Burst Protection Period" with QAM 256, Annex B, Interleave 128 x 1 configuration i.e. the utilized transmission mode). For an interruption of >66 µsec, the Bit Error Rate (BER) before and after Reed-Solomon FEC was proportional to the interruption period. For an interruption <66 µsec, the BER before FEC was still proportional to the period, but the BER after FEC decreased rapidly with shortening of the period. At about 45 µsec, the after FEC Bit Error Rate was substantially null i.e. the end-user (here the AT2000) would not "see" any signal reception error. Consequently, a preferred interruption period of 33 µsec (half of the Standard allowed time slot) was selected, which provides an even larger protection margin. Furthermore, a 33 µsec sampling allows, after Fourier Transforms (FT), a 30 kHz resolution when a channel analysis was performed in the absence of the QAM signal i.e. the final objective of the system.

While a specific embodiment has been described, those skilled in the art will recognize many alterations that could be made within the scope of the invention, which is defined solely according to the following claims.

## Claims

1. A system for maintaining an uninterrupted data flow in a communications network, the system comprising:
a) a transmitter (10) for transmitting the data flow from a data source;
b) a receiver (15) for receiving the data flow;
c) a channel (14) interconnecting the transmitter (10) and the receiver (15), the data flow being communicated between the transmitter (10) and the receiver (15) through the channel (14); and **characterized by**:
d) a switch (48) located in the channel (14) and disposed between the transmitter (10) and the receiver (15), and
e) an error correcting mechanism allowing to recover missing information due to a temporary interruption of data flow,
wherein the switch (48) is openable to interrupt the channel for a period of time sufficient to permit analysis of signal impairment in the channel (14) but short enough that data missed during the interrupted transmission can be recovered by said error correcting means.

2. The system, according to claim 1, in which:
the data flow transmitter (10) includes a QAM modulator (20).

3. The system, according to claim 1 or 2, in which:
the switch (48) is a gated switch (48).

4. The system, according to one of the preceding claims, in which:
the data flow has a burst protection period.

5. The system, according to one of the preceding claims, in which:
the data flow has a channel coding scheme with a pre-determined burst protection period.

6. A method of maintaining uninterrupted data flow in a communications network during signal analysis, the network having a transmitter (10) in communication with a receiver (15), the method **characterized by**:
a) temporarily removing a portion of the data flow from a communications channel (14), the channel (14) communicating the data flow between the transmitter (10) and the receiver (15)
b) measuring a source of signal impairment in the channel (14) when the portion of the data flow is removed, and
c) recovering missing information due to said temporary removing of a portion of the data flow using error correction means, wherein
a switch (48) is located in the channel (14) and disposed between the transmitter (10) and the receiver (15), the switch (48) is opened to interrupt the channel for a period of time sufficient to permit analysis of signal impairment in the channel (14) but short enough to allow that data missed during the interrupted transmission can be recovered.

7. The method, according to claim 6, in which:
the data flow transmitter (10) includes a QAM modulator (20).

8. The method, according to claim 6 or 7, in which:
the data flow has a burst protection period.

9. The method, according to claim 6 or 7, in which:
the data flow has a channel coding scheme with a pre-determined burst protection period.

## Patentansprüche

1. System zum Aufrechterhalten eines ununterbrochenen Datenflusses in einem Kommunikationsnetzwerk, das folgendes umfasst:
(a) einen Sender (10) zum Übertragen eines Datenflusses von einer Datenquelle;
(b) einen Empfänger (15) zum Empfangen des Datenflusses;
(c) einen Kanal (14), der den Sender (10) und den Empfänger (15) verbindet, wobei der Datenfluss zwischen dem Sender (10) und dem Empfänger (15) durch den Kanal (14) kommuniziert wird; **gekennzeichnet durch**:
(d) einen Schalter (48), der sich in dem Kanal (14) befindet und zwischen dem Sender (10) und dem Empfänger (15) angeordnet ist, und
(e) einen Fehlerkorrektur-Mechanismus, der es gestattet, Information, die aufgrund
einer vorübergehenden Unterbrechung des Datenflusses fehlt, wiederherzustellen, wobei der Schalter (48) geöffnet werden kann, um den Kanal für eine Zeitspanne zu unterbrechen, die ausreicht um eine Analyse einer Signalbeeinträchtigung in dem Kanal (14) zu gestatten, aber kurz genug ist, dass die während der unterbrochenen Übertragung verpassten Signale **durch** die Fehlerkorrekturmittel wiederhergestellt werden können.

2. System nach Anspruch 1, bei dem der Datenfluss-Sender (10) einen QAM-Modulator (20) enthält.

3. System nach Anspruch 1 oder 2, bei dem der Schalter (48) ein gattergeschalteter Schalter (48) ist.

4. System nach einem der vorhergehenden Ansprüche, bei dem der Datenfluss eine Burst-Schutzperiode aufweist.

5. System nach einem der vorhergehenden Ansprüche, bei dem der Datenfluss ein Kanal-Kodierungsschema mit einer vorbestimmten Burst-Schutzperiode aufweist.

6. Verfahren zum Aufrechterhalten eines ununterbrochenen Datenflusses in einem Kommunikationsnetzwerk während einer Signalanalyse, wobei das Netzwerk einen Sender (10) umfasst, der mit einem Empfänger 15 kommuniziert, **gekennzeichnet durch**:
(a) vorübergehendes Entfernen eines Teils des Datenflusses aus einem Kommunikationskanal (14), wobei der Kanal (14) den Datenfluss zwischen dem Sender (10) und dem Empfänger (15) kommuniziert,
(b) Messen einer Quellensignal-Beeinträchtigung in dem Kanal (14), wenn der Teil des Datenflusses entfernt ist, und
(c) Wiederherstellen von fehlender Information aufgrund des vorübergehenden Entfernens eines Teils des Datenflusses unter Verwendung von Fehler-Korrekturmitteln, wobei
ein Schalter (48) in dem Kanal (14) und zwischen dem Sender (10) und dem Empfänger (15) angeordnet ist, wobei der Schalter (48) geöffnet wird, um den Kanal für eine Zeitspanne zu öffnen, die ausreicht, um die Analyse der Signalbeeinträchtigung in dem Kanal (14) zu gestatten, aber kurz genug ist, um zu gestatten, dass die während der unterbrochenen Übertragung verpassten Signale wiederhergestellt werden können.

7. Verfahren nach Anspruch 6, bei dem der Datenfluss-Sender (10) einen QAM-Modulator (20) umfasst.

8. Verfahren nach Anspruch 6 oder 7, bei dem der Datenfluss eine Burst-Schutzperiode aufweist.

9. Verfahren nach Anspruch 6 oder 7, bei dem der Datenfluss ein Kanal-Kodierungsschema mit einer vorbestimmten Burst-Schutzperiode aufweist.

## Revendications

1. Système pour maintenir un flux de données ininterrompu dans un réseau de communication, ce système comprenant :
a) un émetteur (10) pour émettre le flux de données à partir d'une source de données ;
b) un récepteur (15) pour recevoir le flux de données ;
c) un canal (14) interconnectant l'émetteur (10) et le récepteur (15), le flux de données étant transmis entre l'émetteur (10) et le récepteur (15) par l'intermédiaire du canal (14) ; et **caractérisé par** :
d) un commutateur (48) situé dans le canal (14) et disposé entre l'émetteur (10) et le récepteur (15), et
e) un mécanisme de correction d'erreurs permettant de récupérer des informations manquantes en raison d'une interruption temporaire de flux de données,
dans lequel le commutateur (48) peut être ouvert pour interrompre le canal pendant une durée suffisante pour permettre l'analyse d'une dégradation de signal dans le canal (14) mais suffisamment courte pour que des données manquées pendant la transmission interrompue puissent être récupérées par le mécanisme de correction d'erreurs.

2. Système selon la revendication 1, dans lequel :
l'émetteur de flux de données (10) comprend un modulateur QAM (20).

3. Système selon la revendication 1 ou 2, dans lequel :
le commutateur (48) est un commutateur commandé (48).

4. Système selon l'une quelconque des revendications précédentes, dans lequel
le flux de données comporte une période de protection de salve.

5. Système selon l'une quelconque des revendications précédentes, dans lequel :
le flux de données comporte un processus de codage de canal ayant une période de protection de salve pré-déterminée.

6. Procédé pour maintenir un flux de données ininterrompu dans un réseau de communication pendant une analyse de signal, le réseau comportant un émetteur (10) en communication avec un récepteur (15), le procédé étant **caractérisé par** les étapes suivantes :
a) retirer temporairement une partie du flux de données provenant d'un canal de communication (14), le canal (14) transmettant le flux de données entre l'émetteur (10) et le récepteur (15),
b) mesurer une source de dégradation de signal dans le canal (14) lorsque la partie du flux de données est retirée, et
c) récupérer des informations manquantes en raison de la suppression temporaire d'une partie du flux de données en utilisant des moyens de correction d'erreurs, dans lequel
un commutateur (48) est situé dans le canal (14) et disposé entre l'émetteur (10) et le récepteur (15), le commutateur (48) est ouvert pour interrompre le canal pendant une durée suffisante pour permettre l'analyse de la dégradation du signal dans le canal (14) mais suffisamment courte pour permettre que les données manquées pendant la transmission interrompue soient récupérées.

7. Procédé selon la revendication 6, dans lequel :
l'émetteur de flux de données (10) comprend un modulateur QAM (20).

8. Procédé selon la revendication 6 ou 7, dans lequel :
le flux de données comporte une période de protection de salve.

9. Procédé selon la revendication 6 ou 7, dans lequel :
le flux de données comporte un processus de codage de canal ayant une période de protection de salve prédéterminée.
